# FASCICULE DE BREVET EUROPEEN

(11) **EP 2 570 281 B1**
(45) Date de publication et mention de la délivrance du brevet: **06.01.2016**
(21) Numéro de dépôt: 12183322.2
(22) Date de dépôt: 06.09.2012
(51) Int. Cl.: B60H 1/00, B60H 1/22

(54) **Structure de carrosserie de véhicule automobile électrique ou hybride, ce véhicule et procédé de contrôle/ modification de la température de son habitacle.**
Karosseriestruktur eines Elektro- oder Hybridkraftfahrzeugs, dieses Fahrzeug und Temperaturkontroll- und -regulierungsverfahren des Innenraums dieses Fahrzeugs
Electric or hybrid automobile body structure, said vehicle and method of controlling/changing the temperature of the interior thereof.

(30) Priorité: 14.09.2011 FR 1158192
(43) Date de publication de la demande: 20.03.2013
(73) Titulaire: HUTCHINSON, 75008 Paris (FR)
(72) Inventeur: Swoboda, Benjamin, 77590 BOIS LE ROI (FR); Dominiak, Christophe, 45290 VARENNES-CHANGY (FR); Karam, Simon, 38340 VOREPPE (FR); Poupa-Parsigneau, Nadine, 45680 DORDIVES (FR)
(74) Mandataire: Bolinches, Michel Jean-Marie

(56) Documents cités:
- DE-A1-102008 058 712
- US-A1- 2004 154 784
- US-A1- 2011 127 025

## Description

La présente invention concerne une structure de carrosserie d'un véhicule automobile électrique ou hybride à batterie d'accumulateurs, ce véhicule incorporant dans sa carrosserie délimitant son habitacle au moins une telle structure et un procédé de contrôle ou de modification de la température de cet habitacle.

Il existe trois catégories principales de véhicules automobiles électriques (i.e. qui sont mus au moins en partie par l'énergie électrique) :
- les véhicules électriques à batterie, qui fonctionnent exclusivement à partir de l'électricité accumulée dans une batterie d'accumulateurs,
- les véhicules hybrides, qui sont mus par l'énergie produite par l'association d'un moteur thermique et d'un moteur électrique, et
- les véhicules à hydrogène, que l'on nomme également véhicules à pile à combustible.

Pour réchauffer ou refroidir l'habitacle de véhicules électriques à batterie, on utilise généralement à l'heure actuelle des systèmes de climatisation connectés à la batterie qui présentent l'inconvénient de ne fonctionner qu'avec cette batterie en sollicitant beaucoup les accumulateurs et donc de réduire d'une manière sensible l'autonomie de ces véhicules.

Le document US-A1-2011/0127025 présente un circuit de climatisation d'un véhicule automobile électrique ou hybride dont l'habitacle comprend une structure de garnissage qui contient des matériaux à changement de phase (MCP) couplés à un régulateur, pour transformer l'énergie électrique reçue d'une source d'alimentation externe au véhicule en énergie thermique stockée par les MCP et transmise à l'habitacle, le but recherché dans ce document étant de faire fonctionner le circuit de climatisation sans utiliser la batterie du véhicule.

Un but de la présente invention est de proposer une structure de carrosserie d'un véhicule automobile électrique ou hybride à batterie d'accumulateurs, cette structure comportant au moins un panneau intérieur, un panneau extérieur et une couche intermédiaire entre ces panneaux, ces panneaux étant chacun à base d'un matériau thermiquement conducteur et électriquement isolant, qui remédie à cet inconvénient tout en permettant de gérer de manière satisfaisante la thermique de l'habitacle de ce véhicule, la couche intermédiaire comprenant au moins un MCP et des composants électriques qui lui sont couplés et qui sont aptes à transformer de l'énergie électrique en énergie thermique stockée par ledit au moins un MCP, de sorte que l'énergie thermique stockée soit ensuite transmise à l'intérieur du véhicule en utilisation de ce dernier grâce à la cristallisation dudit au moins un MCP, lequel peut à l'inverse absorber par sa fusion un excédent de chaleur à l'intérieur du véhicule lorsque ledit au moins un MCP n'est pas rechargé.

A cet effet, une telle structure de carrosserie selon l'invention est ,telle que lesdits composants sont aptes à être connectés à ladite batterie et à transformer ladite énergie électrique qui est disponible lors de la recharge de la batterie, ces composants étant de type passifs et comportant au moins une résistance électrique en contact avec ledit au moins un matériau MCP et destinée à être reliée aux bornes de la batterie.

On notera que ce(s) matériau(x) MCP, tel(s) que des sels hydratés ou des paraffines par exemple, présentent l'avantage de passer de l'état liquide à l'état solide en libérant de la chaleur lors de leur cristallisation (réaction exothermique et isotherme), ce qui permet de chauffer l'habitacle du véhicule, et inversement de passer de l'état solide à l'état liquide en absorbant de la chaleur lors de la fusion (réaction endothermique), ce qui permet de refroidir cet habitacle. Et selon l'invention, l'énergie thermique obtenue à partir de l'énergie électrique issue de la batterie est stockée dans ce(s) MCP grâce à la chaleur latente de fusion qui le(s) caractérise, avant d'être restituée dans l'habitacle pour son chauffage grâce à la cristallisation de ce(s) MCP.

Il convient de noter que l'électricité utilisée par la structure de carrosserie selon l'invention peut provenir de la batterie lors des phases de recharge, comme indiqué ci-dessus, mais qu'elle peut en variante provenir directement d'une prise de courant du secteur équipant un bâtiment (d'habitation, industriel ou commercial) dans ou à côté duquel le véhicule est garé.

On notera également que l'on peut utiliser au choix un ou plusieurs matériau(x) MCP dans la couche intermédiaire assurant le transfert thermique avec l'habitacle, et que ce(s) MCP peu(ven)t être utilisé(s) au choix sous forme de microbilles définies par des enveloppes polymérisées autour de particules de MCP par exemple par une technique de type sol-gel (en partant par exemple de silanes ou silanols), sous forme de microcapsules incorporant une encapsulation minérale (e.g. à base de silice) ou organique (e.g. d'un polymère thermoplastique par exemple obtenu par voie radicalaire tel que du polyméthacrylate de méthyle, du polystyrène ou un polymère acrylique), ou de préférence sous forme de poudre avec des nodules dispersés dans une matrice thermoplastique de préférence cellulaire comme indiqué ci-après en référence à un premier mode de réalisation de l'invention.

On notera en outre que ce(s) MCP peu(ven)t être utilisé(s) pur(s) ou bien en combinaison avec :
- des charges (par exemple métalliques ou carbonées, telles que le graphite, le graphène ou des nanotubes de carbone) pour augmenter la conductivité thermique du ou de chaque MCP, et/ou
- des retardateurs de flamme (e.g. phosphorés ou halogénés), et/ou
- des agents anti-vieillissement (e.g. des stabilisants vis-à-vis des rayonnements UV et des anti-oxydants).

Selon un premier mode de réalisation de l'invention, ledit au moins un matériau MCP est dispersé par exemple au moyen d'une extrudeuse bi-vis dans une matrice polymérique de préférence cellulaire dont le point de fusion est supérieur à celui ou à ceux de ce(s) matériau(x) MCP, telle qu'une matrice thermoplastique cellulaire par exemple à base d'un polypropylène, pour l'obtention d'une plaque sous forme calandrée.

Selon un second mode de réalisation de l'invention, ledit au moins un matériau MCP est supporté par un support métallique poreux, tel qu'une grille microporeuse ou une mousse métallique (par « mousse métallique », on entend de manière connue une structure tridimensionnelle cellulaire à très forte porosité par exemple en forme de coussin qui présente notamment une surface d'échange spécifique très élevée, qui est par exemple obtenue par métallisation d'un structure polymère par électrodéposition). Cette fixation ou accrochage du ou des MCP dans le support peut être réalisée par voie mécanique ou chimique.

Ainsi, ledit au moins un matériau MCP peut être avantageusement intégré à des microcavités d'un milieu ou support solide de type alvéolaire formant ladite couche intermédiaire, ce milieu alvéolaire étant formé par ladite matrice thermoplastique cellulaire dans le premier mode précité et par ledit support métallique poreux dans le second mode précité.

Conformément à ce premier mode de l'invention, ladite au moins une résistance peut former une thermistance CTP à coefficient de température positif, avec ledit au moins un matériau MCP qui est dispersé dans ladite matrice polymérique comprenant au moins un polymère électriquement conducteur à effet CTP et avec deux couches supplémentaires formant électrodes qui sont appliquées contre et de part et d'autre de ladite couche intermédiaire en étant respectivement destinées à être reliées auxdites bornes et qui sont chacune à base d'un matériau plastique électriquement conducteur ou bien d'une couche métallique.

En variante, ladite au moins une résistance peut être de type métallique.

Conformément audit premier mode de l'invention, lesdits composants passifs peuvent alors comprendre deux dites résistances métalliques à relier respectivement auxdites bornes qui sont agencées à travers ledit panneau intérieur et débouchent dans ladite couche intermédiaire en étant en contact avec ladite matrice polymérique (laquelle est de préférence de type thermoplastique cellulaire) et avec ledit au moins un matériau MCP qui y est dispersé.

Toujours selon cette variante mais conformément audit second mode de l'invention, ladite au moins une résistance peut comporter une grille ou mousse métallique microporeuse qui forme ledit support dans ladite couche intermédiaire et dans les microcavités de laquelle est fixé ledit au moins un matériau MCP, cette grille ou mousse métallique étant destinée à être reliée auxdites bornes en deux emplacements distincts qu'elle présente.

Selon une autre caractéristique de l'invention, lesdits panneaux intérieur et extérieur peuvent être chacun de type plastique ou composite à matrice plastique, et ils peuvent respectivement présenter des conductivités thermiques différentes λᵢ et λₑ avec λₑ > λᵢ, de sorte à favoriser la transmission de chaleur dudit au moins un matériau MCP vers l'intérieur du véhicule, ces panneaux étant par exemple à base d'au moins une polyoléfine telle qu'un polyéthylène par exemple.

On notera qu'une structure de carrosserie selon l'invention pourrait comporter d'autres couches plastiques ou composites en plus desdits panneaux et de ladite couche intermédiaire, par exemple pour ajuster cette transmission de chaleur.

Un véhicule automobile électrique ou hybride à batterie d'accumulateurs selon l'invention comporte au moins une structure de carrosserie telle que définie ci-dessus qui est connectée aux bornes de ladite batterie et qui est de préférence obtenue par rotomoulage, extrusion ou injection. En variante, on pourrait envisager des procédés de coulée ou de soufflage pour façonner ces structures de carrosseries selon l'invention.

Avantageusement, ce véhicule peut incorporer plusieurs dites structures de carrosserie sensiblement tout autour de l'habitacle qu'il délimite, notamment dans des parois de portes latérales, de porte arrière et de toit du véhicule.

On notera que la superficie élevée qui caractérise la carrosserie d'un tel véhicule peut être mise à profit pour chauffer ou refroidir efficacement l'habitacle du véhicule grâce à ladite couche intermédiaire qui assure le transfert thermique avec cet habitacle (par libération ou absorption de chaleur selon le cas) grâce à ce(s) matériau(x) MCP que la carrosserie incorpore de préférence sur sensiblement toute sa paroi.

Un procédé de contrôle ou de modification selon l'invention de la température d'un habitacle d'un véhicule automobile électrique ou hybride à batterie d'accumulateurs et à carrosserie délimitant cet habitacle, comprend :
a) lors de la recharge de la batterie, une transformation de l'énergie électrique disponible en énergie thermique stockée par au moins un matériau MCP à changement de phase que comprend la carrosserie, cette transformation étant réalisée par des composants électriques passifs qui sont couplés à ce(s) matériau(x) MCP dans la carrosserie, qui sont alimentés électriquement par la batterie et qui comportent au moins une résistance électrique en contact avec le(s) MCP et reliée aux bornes de la batterie, et
b) lors de la décharge de la batterie en utilisation du véhicule, un chauffage de l'habitacle par une libération dans ce dernier de l'énergie thermique stockée en a) générée par la cristallisation dudit au moins un matériau MCP, étant précisé qu'un refroidissement de l'habitacle est obtenu à l'inverse via une absorption de chaleur de l'habitacle vers ce(s) matériau(x) MCP générée par la fusion de ce(s) dernier(s).

On notera que cette gestion thermique de l'habitacle au moyen de ce(s) MCP intégré(s) à la carrosserie n'exclut pas l'utilisation, à titre principal ou secondaire, d'un système de climatisation classique relié à la batterie du véhicule.

D'autres caractéristiques, avantages et détails de la présente invention ressortiront à la lecture de la description suivante d'un exemple de réalisation de l'invention donné à titre illustratif et non limitatif, cette description étant réalisée en référence avec les dessins joints, parmi lesquels :
la figure 1 est une vue schématique en coupe transversale de la couche intermédiaire de transfert thermique d'une structure de carrosserie selon l'invention, illustrant le principe de stockage d'énergie thermique par des matériaux MCP de cette couche lors de la recharge de la batterie du véhicule,
la figure 2 est une vue schématique en coupe transversale de cette couche intermédiaire de transfert thermique illustrant le principe de libération de chaleur par cette couche vers l'habitacle du véhicule lors de la décharge de cette batterie, pour le chauffage de cet habitacle,
la figure 3 est une vue schématique en coupe transversale de cette couche intermédiaire de transfert thermique illustrant à l'inverse le principe d'absorption de chaleur par cette couche en provenance de cet habitacle pour son refroidissement,
la figure 4 est une vue schématique partielle en coupe transversale d'une partie de structure de carrosserie selon l'invention incluant, entre deux panneaux intérieur et extérieur, une couche intermédiaire de transfert thermique selon ces figures 1 à 3 montrant ces matériaux MCP dispersés dans une matrice thermoplastique conformément au premier mode de réalisation de l'invention,
la figure 5 est une vue schématique partielle en coupe transversale de la structure de carrosserie de la figure 4 illustrant en outre deux résistances électriques métalliques couplées à cette couche intermédiaire de transfert thermique,
la figure 6 est une vue schématique partielle en coupe transversale d'une structure de carrosserie selon l'invention conformément à une variante de la figure 5, montrant en lieu et place de ces résistances une thermistance à effet PTC comprenant entre deux électrodes ces matériaux MCP dispersés dans un polymère conducteur à effet PTC,
la figure 7 est une vue schématique partielle en coupe transversale d'une structure de carrosserie selon l'invention conformément à une autre variante de la figure 5, montrant une grille métallique disposée dans la couche intermédiaire formant résistance et supportant ces MCP, et
la figure 8 est une vue schématique en plan de la grille métallique de support de la figure 7, montrant ces matériaux MCP logés dans des microcavités de cette grille.

A ces figures a été représenté de manière symbolique, uniquement à titre d'exemple, un mélange de deux matériaux MCP 1, MCP 2 pour la couche intermédiaire 2, 2', 2" de transfert thermique d'une structure de carrosserie 1, 1', 1" selon l'invention, étant rappelé qu'une telle couche 2, 2', 2" selon l'invention pourrait ne comporter qu'un unique matériau MCP ou une combinaison de plus de deux MCP.

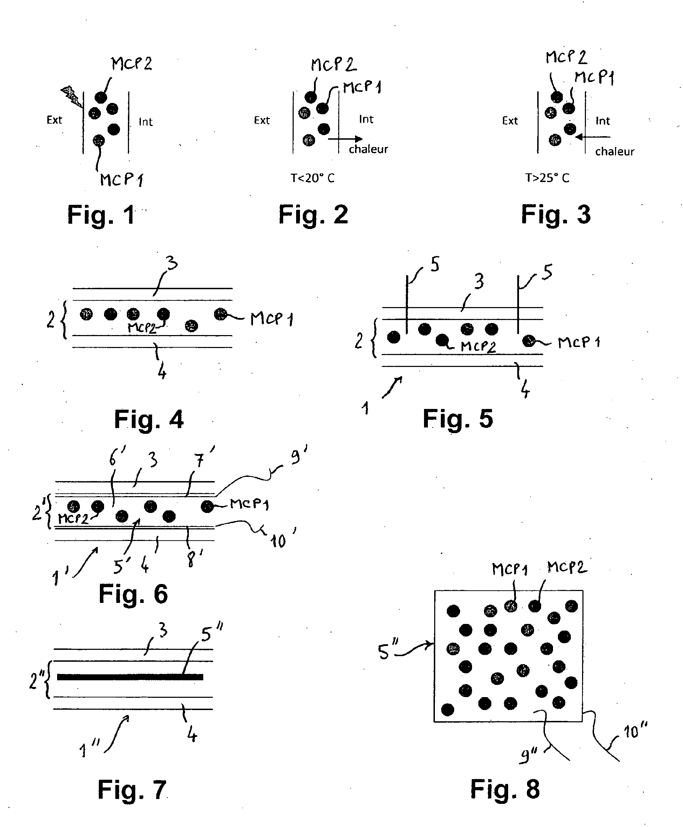

Comme illustré à la figure 1, on procède dans une première étape du procédé de transfert thermique selon l'invention à une transformation de l'énergie électrique disponible lors de la charge ou recharge de la batterie, en énergie thermique stockée par les matériaux MCP 1 et MCP 2 que comprend la couche intermédiaire 2 incluse dans la carrosserie, entre deux panneaux respectivement intérieur 3 et extérieur 4 de celle-ci (ces panneaux 3 et 4 sont visibles aux figures 4 à 7). Cette conversion électrique/ thermique est réalisée par des composants électriques passifs 5, 5', 5" qui sont couplés aux MCP 1 et MCP 2 dans la couche intermédiaire 2, 2', 2" et qui sont connectés aux bornes de la batterie, comme expliqué ci-après, et ce stockage est rendu possible par la chaleur latente de fusion de ces MCP 1 et MCP 2.

Dans une seconde étape mise en oeuvre lors de la décharge de la batterie en utilisation du véhicule et symbolisée à la figure 2, on chauffe l'habitacle par une libération dans ce dernier de l'énergie thermique stockée par ces MCP 1 et MCP 2, cette libération étant générée par leur cristallisation.

A la figure 3 est symbolisé le transfert thermique inverse consistant en une absorption par ces MCP 1 et MCP 2 d'un excédent de chaleur dans l'habitacle pour le refroidissement de ce dernier, absorption qui est générée par la fusion des MCP 1 et MCP 2.

On peut par exemple utiliser des MCP 1 et MCP 2 dont le point de fusion est compris entre 20° C et 25° C, à titre non limitatif, en prévision d'une libération de chaleur par cristallisation lorsque la température ambiante T est inférieure à 20° C (typiquement en hiver, cas préférentiel des figures 1 et 2 avec les abréviations « Ext » et « Int » désignant respectivement les espaces extérieur et intérieur à la carrosserie) et au contraire d'une absorption de chaleur lorsque cette température T est supérieure à 25° C (typiquement en été, cas préférentiel de la figure 3).

On a illustré à la figure 4 un exemple de structure de carrosserie 1 selon l'invention comprenant un panneau intérieur 3 tourné vers l'habitacle, un panneau extérieur 4 tourné vers l'extérieur du véhicule et cette couche intermédiaire 2 de transfert thermique, étant précisé que ces panneaux 3 et 4 sont de préférence chacun à base d'un matériau thermiquement conducteur et électriquement isolant tel qu'un matériau thermoplastique ou composite à matrice thermoplastique par exemple à base d'un polyéthylène. Quant à la matrice thermoplastique dans laquelle sont dispersés les matériaux MCP 1 et MCP 2, elle est de préférence cellulaire et par exemple à base d'un polypropylène.

On a illustré en plus aux figures 5 à 8 des exemples de réalisation de composants électriques passifs 5, 5', 5" aptes à assurer la transformation précitée d'énergie électrique en énergie thermique dans la couche intermédiaire 2, 2', 2", en vue du stockage de chaleur par les MCP 1 et MCP 2, avec :
- à la figure 5 : l'utilisation pour ces composants de deux résistances métalliques 5 à relier respectivement aux bornes positive et négative de la batterie, qui sont agencées à travers le panneau intérieur 3 et débouchent dans la couche intermédiaire 2 en étant en contact avec la matrice thermoplastique contenant les MCP 1 et MCP 2 ;
- à la figure 6 : l'utilisation pour ces composants d'une thermistance CTP à coefficient de température positif 5', avec les MCP 1 et MCP 2 dispersés dans un polymère électriquement conducteur 6' à effet CTP à titre de matrice thermoplastique et avec deux électrodes planes 7' et 8' sous forme de films métalliques ou plastiques électriquement conducteurs qui enserrent de part et d'autre cette matrice 6' et que l'on connecte aux bornes positive et négative de la batterie via deux fils de connexion 9' et 10' respectivement reliés aux électrodes 7' et 8' ; et
- aux figures 7 et 8 : les MCP 1 et MCP 2, au lieu d'être dispersés dans la matrice thermoplastique précitée, sont supportés par une structure métallique poreuse formée par exemple par une grille microporeuse 5" d'épaisseur réduite qui fait office de résistance et qui présente des microcavités recevant les MCP 1 et MCP 2, la grille 5" étant reliée aux bornes positive et négative de la batterie via deux fils de connexion 9" et 10" respectivement reliés à deux emplacements distincts de cette grille 5" (on notera que l'on pourrait en variante remplacer dans cet exemple la grille 5" par une mousse métallique recevant le ou les matériau(x) MCP).

## Revendications

1. Structure de carrosserie (1, 1', 1 ") d'un véhicule automobile électrique ou hybride à batterie d'accumulateurs, cette structure comportant au moins un panneau intérieur (3), un panneau extérieur (4) et une couche intermédiaire (2, 2', 2") entre ces panneaux, ces panneaux étant chacun à base d'un matériau thermiquement conducteur et électriquement isolant, ladite couche intermédiaire comprenant au moins un matériau MCP à changement de phase (MCP 1, MCP 2) et des composants électriques (5, 5', 5") qui lui sont couplés et qui sont aptes à transformer de l'énergie électrique en énergie thermique stockée par ledit au moins un matériau MCP, de telle sorte que cette énergie thermique stockée soit ensuite transmise à l'intérieur du véhicule en utilisation de ce dernier grâce à la cristallisation dudit au moins un matériau MCP, lequel peut à l'inverse absorber par sa fusion un excédent de chaleur à l'intérieur du véhicule lorsque ledit au moins un matériau MCP n'est pas rechargé,
**caractérisée en ce que** lesdits composants sont aptes à être connectés à ladite batterie et à transformer ladite énergie électrique qui est disponible lors de la recharge de ladite batterie, lesdits composants étant de type passifs et comportant au moins une résistance électrique (5, 5', 5") qui est en contact avec ledit au moins un matériau MCP et qui est destinée à être reliée aux bornes de ladite batterie.

2. Structure de carrosserie (1, 1') selon la revendication 1, **caractérisée en ce que** ledit au moins un matériau MCP (MCP 1, MCP 2) est dispersé dans une matrice polymérique de préférence cellulaire dont le point de fusion est supérieur à celui ou à ceux de ce(s) matériau(x) MCP.

3. Structure de carrosserie (1') selon la revendication 2, **caractérisée en ce que** ladite au moins une résistance (5') forme une thermistance CTP à coefficient de température positif (5'), avec ledit au moins un matériau MCP (MCP 1, MCP 2) qui est dispersé dans ladite matrice polymérique comprenant au moins un polymère électriquement conducteur à effet CTP et avec deux couches supplémentaires formant électrodes (7' et 8') qui sont appliquées contre et de part et d'autre de ladite couche intermédiaire (2') en étant respectivement destinées à être reliées auxdites bornes et qui sont chacune à base d'un matériau plastique électriquement conducteur ou bien d'une couche métallique.

4. Structure de carrosserie (1") selon la revendication 1, **caractérisée en ce que** ledit au moins un matériau MCP (MCP 1, MCP 2) est supporté par un support métallique poreux (5"), tel qu'une grille microporeuse (5") ou une mousse métallique.

5. Structure de carrosserie (1, 1") selon une des revendications précédentes, **caractérisée en ce que** ladite au moins une résistance (5, 5") est de type métallique.

6. Structure de carrosserie (1) selon les revendications 2 et 5, **caractérisée en ce que** lesdits composants passifs (5) comprennent deux dites résistances métalliques (5) à relier respectivement auxdites bornes qui sont agencées à travers ledit panneau intérieur (3) et débouchent dans ladite couche intermédiaire (2) en étant en contact avec ladite matrice polymérique et avec ledit au moins un matériau MCP (MCP 1, MCP 2) qui y est dispersé.

7. Structure de carrosserie (1") selon les revendications 3 et 5, **caractérisée en ce que** ladite au moins une résistance (5") comporte une grille ou mousse métallique microporeuse (5") qui forme ledit support dans ladite couche intermédiaire (2") et dans les microcavités de laquelle est fixé ledit au moins un matériau MCP (MCP 1, MCP 2), cette grille ou mousse métallique étant destinée à être reliée auxdites bornes en deux emplacements distincts qu'elle présente.

8. Structure de carrosserie (1, 1', 1 ") selon une des revendications précédentes, **caractérisée en ce que** lesdits panneaux intérieur (3) et extérieur (4) sont de type plastique ou composite à matrice plastique et présentent respectivement des conductivités thermiques différentes λᵢ et λₑ avec λₑ > λᵢ, de sorte à favoriser la transmission de chaleur dudit au moins un matériau MCP (MCP 1, MCP 2) vers l'intérieur du véhicule, ces panneaux étant par exemple à base d'au moins une polyoléfine telle qu'un polyéthylène par exemple.

9. Véhicule automobile électrique ou hybride à batterie d'accumulateurs, **caractérisé en ce qu'**il comporte au moins une structure de carrosserie (1, 1', 1") selon une des revendications précédentes qui est connectée aux bornes de ladite batterie et qui est de préférence obtenue par rotomoulage, extrusion ou injection.

10. Véhicule automobile selon la revendication 9, **caractérisé en ce qu'**il incorpore plusieurs dites structures de carrosserie (1, 1', 1") sensiblement tout autour de l'habitacle qu'il délimite, notamment dans des parois de portes latérales, de porte arrière et de toit du véhicule.

11. Procédé de contrôle ou de modification de la température d'un habitacle d'un véhicule automobile électrique ou hybride à batterie d'accumulateurs et à carrosserie (1, 1', 1 ") délimitant cet habitacle, **caractérisé en ce qu'**il comprend :
a) lors de la charge de la batterie, une transformation de l'énergie électrique disponible en énergie thermique stockée par au moins un matériau MCP à changement de phase (MCP 1, MCP2) que comprend la carrosserie, cette transformation étant réalisée par des composants électriques (5, 5', 5") passifs qui sont couplés à ce(s) matériau(x) MCP dans la carrosserie et qui sont alimentés électriquement par la batterie, lesdits composants comportant au moins une résistance électrique (5, 5', 5") en contact avec ledit au moins un matériau MCP et reliée aux bornes de ladite batterie, et
b) lors de la décharge de la batterie en utilisation du véhicule, un chauffage de l'habitacle par une libération dans ce dernier de l'énergie thermique stockée en a) générée par la cristallisation dudit au moins un matériau MCP, étant précisé qu'un refroidissement de l'habitacle est obtenu à l'inverse via une absorption de chaleur de l'habitacle vers ce(s) matériau(x) MCP générée par la fusion de ce(s) dernier(s).

## Patentansprüche

1. Karosseriestruktur (1, 1', 1") eines Elektro- oder Hybridkraftfahrzeugs mit Akkumulatorenbatterie, wobei diese Struktur mindestens eine innere Platte (3), eine äußere Platte (4) und eine Zwischenschicht (2, 2', 2") zwischen diesen Platten aufweist, wobei jede dieser Platten auf einem thermisch leitenden und elektrisch isolierenden Material basiert, wobei die Zwischenschicht mindestens ein MCP-Material mit Phasenwechsel (MCP 1, MCP 2) und elektrische Komponenten (5, 5', 5") umfasst, die mit ihm verbunden sind und die imstande sind, die von dem mindestens einen MCP-Material gespeichert elektrische Energie in thermische Energie derart umzuwandeln, dass diese gespeicherte elektrische Energie dann in das Innere des Fahrzeugs bei Verwendung desselben dank der Kristallisierung des mindestens einen MCP-Materials geleitet wird, das, umgekehrt, durch seine Fusion einen Wärmeüberschuss im Innern des Fahrzeugs absorbieren kann, wenn das mindestens eine MCP-Material nicht aufgeladen wird,
**dadurch gekennzeichnet, dass** die Komponenten imstande sind, mit der Batterie verbunden zu sein und die elektrische Energie, die beim Aufladen der Batterie verfügbar ist, umzuwandeln, wobei die Komponenten vom passiven Typ sind und mindestens einen elektrischen Widerstand (5, 5', 5") aufweisen, der mit dem mindestens einen MCP-Material im Kontakt ist und der bestimmt ist, mit den Klemmen der Batterie verbunden zu sein.

2. Karosseriestruktur (1, 1') nach Anspruch 1, **dadurch gekennzeichnet, dass** das mindestens eine MCP-Material (MCP 1, MCP 2) in einer vorzugsweise zellulären Polymermatrix verteilt ist, deren Schmelzpunkt über dem oder denen dieses/dieser MCP-Material/ien liegt.

3. Karosseriestruktur (1') nach Anspruch 2, **dadurch gekennzeichnet, dass** der mindestens eine Widerstand (5') einen CTP-Thermistor mit positivem Temperaturkoeffizienten (5') mit dem mindestens einen MCP-Material (MCP 1, MCP 2) bildet, das in der Polymermatrix verteilt ist, umfassend mindestens ein elektrisch leitendes Polymer mit CTP-Effekt, und mit zwei zusätzlichen Schichten, die Elektroden (7' und 8') bilden, die auf der einen und der anderen Seite der Zwischenschicht (2') anliegen und jeweils bestimmt sind, mit den Klemmen verbunden zu sein, die jeweils auf der Basis eines elektrisch leitenden Kunststoffmaterials oder einer Metallschicht sind.

4. Karosseriestruktur (1") nach Anspruch 1, **dadurch gekennzeichnet, dass** das mindestens eine MCP-Material (MCP 1, MCP 2) von einer porösen metallischen Unterlage (5") wie ein mikroporöses Gitter (5") oder ein Metallschaum gestützt ist.

5. Karosseriestruktur (1, 1") nach einem der vorangehenden Ansprüche, **dadurch gekennzeichnet, dass** der mindestens eine Widerstand (5, 5") metallischen Typs ist.

6. Karosseriestruktur (1) nach den Ansprüchen 2 und 5, **dadurch gekennzeichnet, dass** die passiven Komponenten (5) zwei sogenannte Metallwiderstände (5) umfassen, die jeweils mit den Klemmen zu verbinden sind, die durch die innere Platte (3) ausgebildet sind und in die Zwischenschicht (2) ausmünden, wobei sie mit der Polymermatrix und mit dem mindestens einen MCP-Material (MCP 1, MCP 2), das dort verteilt ist, im Kontakt sind.

7. Karosseriestruktur (1") nach den Ansprüchen 3 und 5, **dadurch gekennzeichnet, dass** der mindestens eine Widerstand (5") ein Mikroporen-Metallgitter oder -schaum (5") aufweist, das/der die Unterlage in der Zwischenschicht (2") bildet und in dessen/deren Mikrohohlräumen das mindestens eine MCP-Material (MCP 1, MCP 2) befestigt ist, wobei dieses Metallgitter oder -schaum bestimmt ist, mit den Klemmen an zwei verschiedenen Stellen, die es/er aufweist, verbunden zu sein.

8. Karosseriestruktur (1, 1', 1") nach einem der vorangehenden Ansprüche, **dadurch gekennzeichnet, dass** die innere Platte (3) und die äußere Platte (4) vom Typ Kunststoff oder Verbundmaterial mit Kunststoffmatrix sind und jeweils unterschiedliche thermische Leitfähigkeiten λᵢ und λₑ aufweisen mit λₑ > λᵢ, um die Übertragung von Wärme von dem mindestens einen MCP-Material (MCP 1, MCP 2) in das Innere des Fahrzeugs zu fördern, wobei diese Platten beilspielsweise auf der Basis von mindestens einem Polyolefin wie beilspielsweise ein Polyethylen sind.

9. Elektro- oder Hybrid-Kraftfahrzeug mit Akkumulatorenbatterie, **dadurch gekennzeichnet, dass** es mindestens eine Karosseriestruktur (1, 1', 1") nach einem der vorangehenden Ansprüche aufweist, die mit den Klemmen der Batterie verbunden ist und die vorzugsweise durch Rotationsformen, Extrusion oder Spritzen hergestellt ist.

10. Kraftfahrzeug nach Anspruch 9, **dadurch gekennzeichnet, dass** es mehrere sogenannte Karosseriestrukturen (1, 1', 1") etwa ganz um den Fahrgastraum herum, den es begrenzt, vor allem in Wänden von Seitentüren, der Heckklappe und des Fahrzeugdachs, umfasst.

11. Steuerungs- oder Änderungsverfahren der Temperatur eines Fahrgastraums eines Elektro- oder Hybridfahrzeugs mit Akkumulatorenbatterie und Karosserie (1, 1', 1"), die diesen Fahrgastraum begrenzt, **dadurch gekennzeichnet, dass** es umfasst :
a) beim Laden der Batterie eine Umwandlung der verfügbaren elektrischen Energie in thermische Energie, die von mindestens eine MCP-Material mit Phasenwechsel (MCP 1, MCP 2), das die Karosserie umfasst, gespeichert wird, wobei diese Umwandlung von vorzugsweise passiven elektrischen Komponenten (5, 5', 5") durchgeführt wird, die mit diesem/n MCP-Material/ein in der Karosserie verbunden sind und die von der Batterie elektrisch versorgt werden, wobei die Komponenten mindestens einen elektrischen Widerstand (5, 5', 5") aufweisen, der im Kontakt mit dem mindestens einen MCP-Material und mit den Klemmen der Batterie verbunden ist, und
b) beim Entladen der Batterie bei Benutzung des Fahrzeugs, ein Heizen des Fahrgastraums durch eine Freigabe in denselben von thermischer, in a) gespeicherter Energie, die durch die Kristallisierung des mindestens einen MCP-Materials erzeugt wurde, wobei zu präziseren ist, dass eine Kühlung des Fahrgastraums umgekehrt durch eine Absorption von erzeugter Wärme aus dem Fahrgastraum durch dieses/diese MCP-Material/ien durch sein/ihr Schmelzen erfolgt.

## Claims

1. Bodywork structure (1, 1', 1") of an electric or hybrid motor vehicle with an accumulator battery, this structure comprising at least one interior panel (3), one exterior panel (4) and one intermediate layer (2, 2', 2") between these panels, these panels each being based on a thermally conducting and electrically insulating material, wherein said intermediate layer comprises at least one phase change material PCM (PCM 1, PCM 2) and electric components (5, 5', 5") which are coupled to it and which are able to convert electrical energy into thermal energy stored by said at least one PCM material, so that this stored thermal energy is then transmitted to the interior of the vehicle when the latter is in use thanks to the crystallizing of said at least one PCM, which is conversely able, by its melting, to absorb an excess of heat inside the vehicle when said at least one PCM is not recharged, **characterized in that** said components are able to be connected to said battery and to convert said electrical energy which is available when said battery is being recharged, said components (5, 5', 5") being of passive type and comprising at least one electric resistor (5, 5', 5") which is in contact with said at least one PCM and which is designed to be connected to the terminals of said battery.

2. Bodywork structure (1, 1') according to Claim 1, **characterized in that** said at least one PCM (PCM 1, PCM 2) is dispersed in a polymer matrix, preferably cellular, the melting point of which is higher than that or those of this/these PCM(s).

3. Bodywork structure (1') according to Claim 2, **characterized in that** said at least one resistor (5') forms a PTC thermistor with a positive temperature coefficient (5'), with said at least one PCM (PCM 1, PCM 2) which is dispersed in said polymer matrix comprising at least one PTC electrically conducting polymer and with two additional layers forming electrodes (7' and 8') which are applied against and on either side of said intermediate layer (2') being respectively designed to be connected to said terminals and which are each based on an electrically conducting plastic or else based on a metal layer.

4. Bodywork structure (1") according to Claim 1, **characterized in that** said at least one PCM (PCM 1, PCM 2) is supported by a porous metal support (5"), such as a microporous mesh (5") or a metal foam.

5. Bodywork structure (1, 1") according to any of the preceding claims, **characterized in that** said at least one resistor (5, 5") is of the metal type.

6. Bodywork structure (1) according to Claims 2 and 5, **characterized in that** said passive components (5) comprise two said metal resistors (5) to be connected respectively to said terminals which are arranged through said interior panel (3) and emerge in said intermediate layer (2) being in contact with said polymer matrix and with said at least one PCM (PCM 1, PCM 2) dispersed therein.

7. Bodywork structure (1") according to Claims 3 and 5, **characterized in that** said at least one resistor (5") comprises a microporous metal foam or mesh (5") which forms said support in said intermediate layer (2") and in the microcavities of which said at least one PCM (PCM 1, PCM 2) is fixed, this metal foam or mesh being designed to be connected to said terminals at two separate locations of this foam or mesh.

8. Bodywork structure (1, 1', 1") according to one of the preceding claims, **characterized in that** said interior panel (3) and exterior panel (4) are of plastic or of plastic matrix composite type and respectively have different thermal conductivities λᵢ and λₑ where λₑ > λᵢ, so as to encourage the transmission of heat from said at least one PCM (PCM 1, PCM 2) to the interior of the vehicle, these panels for example being based on at least one polyolefin such as a polyethylene for example.

9. Electric or hybrid motor vehicle with an accumulator battery, **characterized in that** it comprises at least one bodywork structure (1, 1', 1") according to one of the preceding claims which is connected to the terminals of said battery and which is preferably obtained by rotation molding, extrusion or injection molding.

10. Motor vehicle according to Claim 9, **characterized in that** it incorporates several said bodywork structures (1, 1', 1") substantially all around the passenger compartment it delimits, in particular in walls of side doors, of a rear door and of a roof of the vehicle.

11. Method for controlling or modifying the temperature of a passenger compartment of an electric or hybrid motor vehicle with an accumulator battery and a bodywork (1, 1', 1") delimiting this passenger compartment, wherein it comprises:
a) while charging the battery, converting the available electrical energy into thermal energy stored by at least one phase change material PCM (PCM 1, PCM 2) that the bodywork comprises, this conversion being performed by passive electrical components (5, 5', 5"), which are coupled to this (these) PCM(s) in the bodywork and which are electrically powered by the battery, said components comprising at least one electric resistor (5, 5', 5") in contact with said at least one PCM and connected to the terminals of said battery, and
b) while the battery is discharging when the vehicle is in use, heating the passenger compartment by a release into the latter of the thermal energy stored in a) generated by the crystallization of said at least one PCM, a cooling of the passenger compartment being conversely obtained via an absorption of heat from the passenger compartment into this (these) PCM(s) generated by the melting of the latter.
